# EUROPÄISCHE PATENTSCHRIFT

(11) **EP 3 727 903 B1**
(45) Veröffentlichungstag und Bekanntmachung des Hinweises auf die Patenterteilung: **12.05.2021**
(21) Anmeldenummer: 18830783.9
(22) Anmeldetag: 18.12.2018
(51) Int. Cl.: B60D 1/64, B62D 53/08, B62D 53/12

(54) **KUPPLUNGSSYSTEM**
COUPLING SYSTEM
SYSTÈME D'EMBRAYAGE

(30) Priorität: 21.12.2017 DE 102017130957
(43) Veröffentlichungstag der Anmeldung: 28.10.2020
(73) Patentinhaber: SAF-HOLLAND GmbH, 63856 Bessenbach (DE)
(72) Erfinder: KÖSTER, Mario Sebastian, 78351 Bodman-Ludwigshafen (DE)
(74) Vertreter: Müller Schupfner & Partner Patent- und Rechtsanwaltspartnerschaft mbB
(86) Internationale Anmeldenummer: PCT/EP2018/085399
(87) Internationale Veröffentlichungsnummer: WO 2019/121619

(56) Entgegenhaltungen:
- WO-A2-01/46001
- DE-A1-102006 059 681
- DE-T2- 60 102 393
- GB-A- 1 020 241
- US-A- 3 428 334

## Beschreibung

Die vorliegende Erfindung betrifft ein Kupplungssystem, einen Kupplungsstecker sowie eine Kupplungsaufnahme, insbesondere zum Einsatz in Nutzfahrzeugen.

Für schwere Nutzfahrzeuge ist es seit langem bekannt, zur Verbindung eines Anhängers mit einem Zugfahrzeug eine Kombination aus einer Sattelkupplung und einem Königszapfen zu verwenden. Gleichzeitig werden, insbesondere um den Anhänger mit Druckluft und elektrischer Energie zu versorgen, an verschiedenen Stellen zwischen dem Zugfahrzeug und dem Anhänger flexible Leitungen verlegt, welche auch eine Schwenkbewegung des Anhängers relativ zum Zugfahrzeug ausgleichen können. Diese flexiblen Leitungen werden zumeist durch den Anwender des Nutzfahrzeuges per Hand zusammengeschlossen und verschleißen durch die periodischen Verformungen bei Schwenkbewegung des Anhängers relativ zum Nutzfahrzeug kontinuierlich während Ihres Einsatzlebens. Bisher ist für diese Leitungssysteme auch keine Möglichkeit bekannt, einen automatischen Ankuppelvorgang eines Zugfahrzeuges an einen Anhänger, mit dem gleichzeitigen Verbinden von Druckleitungen und elektrischen Leitungen zwischen dem Zugfahrzeug und dem Anhänger, zu kombinieren.

DE 601 02 393 T2 betrifft ein Kupplungssystem für ein Fahrzeug zum Kuppeln mindestens einer Zugmaschineneinheit mit einer Anhängereinheit.

WO 01/46 001 A2 bezieht sich auf eine Sattelkupplung für die Kupplung einer Sattelzugmaschine mit einem Sattelanhänger, mit einer Sattelplatte, einem Königszapfen, mit einer Innenbohrung, mit einer äußeren Kupplungs- oder Eingriffsfläche sowie mit Anschlüssen zur Verbindung mit elektrischen und pneumatischen Versorgungsleitungen.

DE 10 2006 059 681 A1 betrifft eine Verbindungsvorrichtung für eine Kupplungseinrichtung mit einem ersten und einem zweiten Kupplungsteil zur Verbindung von Druckleitungen.

GB 1,020,241 und US-3,428,334 beziehen sich auf Kupplungssysteme von Verbindungen zwischen einem Anhänger und einem Zugfahrzeug, mittels welchem Druckluft übertragen wird.

Aufgabe der vorliegenden Erfindung ist es, ein System bereit zu stellen, welches auf verbesserte Weise die Übertragung von elektrischer Energie und Fluiddruck zwischen einem Zugfahrzeug und einem Anhänger erlaubt. Weiterhin ist es Aufgabe der vorliegenden Erfindung, dieses System derart auszulegen, dass eine automatische Ankupplung bei gleichzeitigem Anschluss des Anhängers an das Energieversorgungssystem des Zugfahrzeuges vorgenommen werden kann.

Diese Aufgaben werden gelöst mit einem Kupplungsstecker gemäß Anspruch 1, einer Kupplungsaufnahme gemäß Anspruch 13 und einem Kupplungssystem gemäß Anspruch 15. Weitere Vorteile und Merkmale der vorliegenden Erfindung ergeben sich aus den abhängigen Ansprüchen.

Erfindungsgemäß ist ein Kupplungsstecker vorgesehen, welcher insbesondere zum Einsatz an oder in einem Königszapfen ausgelegt ist, wobei der Kupplungsstecker ein erstes Kupplungsteil, ein zweites Kupplungsteil ein drittes Kupplungsteil umfasst, wobei das zweite Kupplungsteil zumindest bereichsweise innerhalb des ersten Kupplungsteils angeordnet ist und das dritte Kupplungsteil zumindest bereichsweise innerhalb des zweiten Kupplungsteils angeordnet ist, wobei sich die Kupplungsteile im Bereich ihrer Überlappung koaxial zu einer ersten Achse erstrecken, wobei zwischen dem ersten Kupplungsteil und dem zweiten Kupplungsteil ein erster Druckraum gebildet ist, wobei zwischen dem zweiten Kupplungsteil und dem dritten Kupplungsteil ein zweiter Druckraum gebildet ist, und wobei das dritte Kupplungsteil hohlkörperförmig ausgebildet ist und einen dritten Druckraum bildet, wobei in einem ersten Steckerbereich des Kupplungssteckers zumindest das erste und dritte Kupplungsteil zum fluiddichten Anschluss an ein Fluiddrucksystem eines Anhängers ausgelegt sind, wobei in einem zweiten Steckerbereich des Kupplungssteckers zumindest das erste und dritte Kupplungsteil für den Anschluss an eine Kupplungsaufnahme ausgelegt sind, wobei der zweite Druckraum im Bereich des ersten Steckerbereiches fluiddicht verschlossen ist oder in die Umgebung mündet, oder mit einer Leckageüberwachung verbunden ist. Der Kupplungsstecker ist, mit Vorteil der auf der Anhängerseite des Nutzfahrzeuges festgelegte Teil des Kupplungssystems, zur Übertragung von Fluiddruck, insbesondere bevorzugt pneumatischem Luftdruck oder hydraulischem Druck ausgelegt. Weiterhin bevorzugt ist der Stecker zur Übertragung von elektrischer Energie ausgebildet. Für den Einsatz an und insbesondere in einem Königszapfen ist der Kupplungsstecker an seiner Außenseite überwiegend zylindrisch ausgebildet, um in eine zylindrische Bohrung in einem Königszapfen eingeführt werden zu können. Dabei weist der Kupplungsstecker zumindest drei Kupplungsteile auf, welche mit Vorteil im Wesentlichen hohlzylinderförmig ausgebildet sind. Als im Wesentlichen hohlzylinderförmige Ausbildung wird dabei insbesondere eine überwiegend hohlkörperförmige Geometrie bezeichnet, welche lediglich beispielsweise im Bereich des Anschlusses von Druckleitungen an das jeweilige Kupplungsteil, von der mathematischen Rotationssymmetrie abweicht und ansonsten rotationssymmetrisch um die erste Achse ausgebildet ist. Die Kupplungsteile sind dabei überwiegend ineinanderliegend angeordnet, wobei das erste Kupplungsteil im Sinne der vorliegenden Erfindung das Äußere dieser Kupplungsteile ist und das dritte Kupplungsteil das Innere, während das zweite Kupplungsteil zwischen dem ersten und dritten Kupplungsteil angeordnet ist. Bevorzugt ist das zweite Kupplungsteil dabei auf zumindest 85% seiner Erstreckung entlang der ersten Achse innerhalb des von dem ersten Kupplungsteil aufgespannten Raumes angeordnet. Gleichermaßen bevorzugt ist das dritte Kupplungsteil über zumindest 80% seiner Länge entlang der ersten Achse innerhalb des zweiten Kupplungsteils angeordnet. Hierdurch ergibt sich eine besonders kompakte Ausbildung des Kupplungssteckers und es kann durch die möglichst wenig hervorragenden Teile des Kupplungssteckers eine robuste Auslegung erreicht werden. Vorzugsweise kann neben dem zumindest einen dritten Kupplungsteil ein oder eine Vielzahl weiterer dritter Kupplungsteile im Sinne der vorliegenden Erfindung vorgesehen sein. Die dritten Kupplungsteile können bevorzugt nebeneinander innerhalb des zweiten Kupplungsteils angeordnet sein und somit eine Vielzahl von Druckleitungen zur Verbindung zwischen Anhänger und Zugfahrzeug ermöglichen. Es versteht sich, dass an der Kupplungsaufnahme die entsprechende Zahl an dritten Aufnahmeteilen zur Verbindung mit den dritten Kupplungsteilen vorgesehen ist. Der erste Steckerbereich des Kupplungssteckers ist dabei vorzugsweise der Bereich, welcher zum Anschluss sowohl von elektrischen Leitungen als auch von Fluiddruckleitungen an das System des Anhängers ausgelegt ist. Im eingebauten Zustand des Kupplungssteckers am Anhänger ist dabei der erste Steckerbereich vorzugsweise an dessen Oberseite angeordnet. Mit Vorteil weisen das erste Kupplungsteil und das dritte Kupplungsteil im Bereich des ersten Steckerbereiches Anschlusszapfen zum Anschluss von Fluidleitungen oder Fluidrohren auf. Der zweite Druckraum mündet im Bereich des ersten Steckerbereiches vorzugsweise in die Umgebung oder ist mit einer Leckageüberwachung verbunden. Auf diese Weise kann der zweite Druckraum insbesondere zur Trennung des ersten Druckraumes und des zweiten Druckraumes genutzt werden, falls in einem dieser beiden Druckräume eine Leckage entsteht und somit die Gefahr bestehen würde, dass unter Druck stehendes Fluid vom ersten Druckraum in den dritten Druckraum bzw. vom dritten Druckraum in den ersten Druckraum gelangt. Indem der zweite Druckraum zwischen dem ersten und dem dritten Druckraum angeordnet ist, und gleichzeitig zur Abfuhr von möglichen Leckage-Drücken ausgelegt ist, kann die Sicherheit des Kupplungssteckers und eines mit diesem Kupplungsstecker ausgestatteten Kupplungssystems erhöht werden. Im bevorzugten Fall, dass an den zweiten Druckraum eine Leckageüberwachung angeschlossen ist, kann es dem Fahrer auch signalisiert werden, wenn im zweiten Druckraum unerwartete Drücke vorliegen, welche auf eine zurückzuführen sind. In einer weiterhin bevorzugten Ausführungsform ist die Leckageüberwachung als Drucksensor ausgebildet und innerhalb des zur Umgebung hin abgeschlossenen zweiten Druckraumes angeordnet. Diese bevorzugte Ausführungsform bedeutet, dass der zweite Druckraum verschlossen und an eine Leckageüberwachung angeschlossen ist. Dem ersten Steckerbereich entlang der ersten Achse gegenüberliegend, ist am Kupplungsstecker ein zweiter Steckerbereich vorgesehen, welcher insbesondere zum Anschluss an eine Kupplungsaufnahme ausgelegt ist. Im zweiten Steckerbereich sind der erste und der dritte Druckraum offen ausgelegt, um derart in eine Kupplungsaufnahme und dort vorhandene Aufnahmeteile eingesteckt zu werden, dass ein unter Druck stehendes Fluid vom Kupplungsstecker in die Kupplungsaufnahme und umgekehrt übertragen werden kann. Für diesen Zweck sind im Bereich des zweiten Steckerbereiches vorzugsweise Dichtungselemente und/oder bevorzugt glatt polierte Flächen an den Kupplungsteilen ausgebildet, damit diese möglichst fluiddicht mit entsprechenden Aufnahmeteilen einer Kupplungsaufnahme zusammengeschlossen werden können. Im Rahmen der vorliegenden Erfindung ist es bevorzugt, dass der Kupplungsstecker und dabei insbesondere das erste Kupplungsteil mit einer Befestigungsgeometrie zur Festlegung an einem Königszapfen eines Anhängers ausgebildet ist. Eine sichere Festlegung des Kupplungssteckers am Königszapfen erhöht dessen Lebensdauer insbesondere gegenüber den im normalen Betrieb auftretenden Vibrationen am Nutzfahrzeug. Bevorzugt ist der Kupplungsstecker, insbesondere bevorzugt das erste Kupplungsteil, stoffschlüssig, d.h. mittels einer Schweiß-oder Klebverbindung, an oder innerhalb eines Königszapfens festgelegt. Der zweite Steckerbereich des Kupplungssteckers ist dabei vorzugsweise der Bereich, in welchem der Kupplungsstecker, insbesondere durch Überlappung mit einer Kupplungsaufnahme, in Wechselwirkung mit einer Kupplungsaufnahme tritt, um insbesondere die Übertragung von Fluiddruck und elektrischer Energie zu ermöglichen.

In einer bevorzugten Ausführungsform ist das erste Kupplungsteil gegen Verdrehung um die erste Achse relativ zu dem Anhänger gesichert. Durch die Festlegung zumindest des ersten Kupplungsteils und insbesondere bevorzugt des gesamten Kupplungssteckers am Anhänger, können sämtliche Zu- und Ableitungen zum Kupplungsstecker, welche am Anhänger befestigt sind, als starre Leitungen ausgelegt werden und müssen keine Schwenk-oder Verlagerungsbewegungen des Kupplungssteckers relativ zum Anhänger durchführen und entsprechende periodische Verformungen aushalten. Auf diese Weise können sowohl die Wandstärken der jeweiligen Leitungen reduziert werden, als auch der benötigte Bauraum zum Anschluss des Kupplungssteckers an das System des Anhängers deutlich verkleinert und dadurch so optimiert werden. Weiterhin bevorzugt stützt dabei das erste Kupplungsteil das zweite Kupplungsteil und/oder zusätzlich das dritte Kupplungsteil ab. Zwischen dem zweiten und dem dritten Kupplungsteil ist vorzugsweise ebenfalls eine stützende Haltegeometrie derart ausgebildet, dass die drei Kupplungsteile schlussendlich gegen Verdrehung relativ zum Anhänger gesichert werden können.

Bevorzugt weist zumindest eines der Kupplungsteile im Bereich des zweiten Steckerbereiches einen Schleifkontakt eines elektrischen Systems auf. Das elektrische System ist dabei vorzugsweise mit elektrischen Leitungen und Schleifkontakten ausgestattet und erlaubt die Übertragung von elektrischer Spannung von einer am Zugfahrzeug festgelegten Kupplungsaufnahme über Schleifkontakte hin zu einem Leitungssystem am Kupplungsstecker, welches wiederum den Anhänger mit elektrischer Energie versorgt. Bevorzugt ist dabei in oder an der Wand zumindest eines der Kupplungsteile ein Schleifkontakt vorgesehen, welcher im Bereich des zweiten Steckerbereiches angeordnet und dafür ausgelegt ist, in elektrischem Kontakt mit einem entsprechenden Abnehmer an einer Kupplungsaufnahme angeschlossen zu werden.

Bevorzugt ist dabei der Schleifkontakt mit einem elektrischen Leiter verbunden, welcher isoliert vom jeweiligen Kupplungsteil ist und im ersten Steckerbereich bevorzugt aus dem Kupplungsstecker ragt. Diese Ausführungsform erlaubt es, dass an einem der Kupplungsteile mehrere elektrische Leiter mit jeweils daran angeschlossenen Schleifkontakten, vorgesehen sind. Nachteil dieser Ausführungsform ist, dass die Herstellung eines solchen Kupplungsteiles mit mehreren Schleifkontakten und elektrischen Leitern aufwendig ist. Für den Fall, dass zwei oder sogar nur eine elektrische Leitung ausreichend ist, kann anstelle eines elektrischen Leiters auch eines der Kupplungsteile selbst als elektrischer Leiter fungieren, wobei dieses Kupplungsteil jeweils mit einem Schleifkontakt, welcher im einfachsten Fall die Oberfläche des Kupplungsteiles ist, in elektrischen Kontakt mit dem entsprechenden Aufnahmeteil einer Kupplungsaufnahme gebracht werden kann. In einer besonders bevorzugten Ausführungsform sind sowohl die Schleifkontakte, als auch die elektrischen Leiter, als auch das jeweilige Kupplungsteil mit aufgedampften Metallschichten ausgebildet. Entsprechend sind dabei zwischen der aufgedampften Metallschicht und dem Material des jeweiligen Kupplungsteils isolierende Schichten oder Bereiche vorgesehen, welche die elektrische Trennung der einzelnen elektrischen Leiter voneinander erlauben.

In einer bevorzugten Ausführungsform ist zumindest eines der Kupplungsteile aus elektrisch nicht leitendem, insbesondere bevorzugt nicht-metallischem, Material hergestellt, wobei auf dieses zumindest eine Kupplungsteil zumindest ein Schleifkontakt aufgebracht, bevorzugt aufgeklebt oder aufgedampft ist. Ein sich ergebender Vorteil dieser Ausführungsform ist, dass ein zusätzlicher Isolator zwischen den einzelnen elektrischen Leitern und zwischen mehreren elektrischen Leitern und dem Kupplungsteil, an welchem diese befestigt sind nicht erforderlich ist. Hierdurch wird auf eine zusätzliche Isolationsschicht verzichtet und Bauraum gespart, wodurch trotz erhöhtem Leitungsvolumen (höhere Durchflussmenge) eine kompakte Bauweise des Steckers erreicht wird. Als elektrisch nicht leitendes Material ist besonders ein Faserverbundmaterial mit Polypropylen oder Polyamid als Matrixmaterial bevorzugt. Für eine vereinfachte Herstellung des Steckers ist es auch bevorzugt, die Kupplungsteile vollständig aus einem der zuvor genannten Kunststoffe oder bevorzugt aus PET herzustellen, welches höchste Festigkeit mit guten Gleiteigenschaften und einer hohen elektrischen Isolationsfähigkeit verbindet.

Besonders bevorzugt sind dabei zumindest zwei benachbarte Kupplungsteile aus elektrisch nicht leitendem, insbesondere bevorzugt nicht-metallischem, Material hergestellt, wobei auf beide dieser Kupplungsteile je zumindest ein Schleifkontakt aufgebracht, bevorzugt aufgeklebt oder aufgedampft ist. Der Vorteil von Bereichen und Teilen des Steckers, die aus nichtleitendem Material gefertigt ist, dass diese Kupplungsteile als ein Körper gefertigt werden, wobei z.B. Verstrebungen zwischen den Kupplungsteilen vorgesehen werden können. Dies war bislang nicht möglich, da die Kupplungsteile durch einen Isolator / Trennmantel getrennt werden mussten. Dank der Ausbildung aus elektrisch nicht leitendem Material, entfällt die Notwendigkeit, die Kupplungsteile selbst voneinander zu trennen und es kann der Kupplungsstecker als einstückiger Verbund zweier oder aller Kupplungsteile deutlich stabiler ausgebildet sein. Die Fertigung kann hierdurch günstiger und die Dichtungen zuverlässiger gestaltet werden, beispielsweise durch Einsatz eines Druckgussverfahrens.

Bevorzugt erstreckt sich der Schleifkontakt mit einem Bogenwinkel von zumindest 180° um die erste Achse an der Innen-oder Außenwand des jeweiligen Kupplungsteils. Mit einer Erstreckung des Schleifkontakts mit einem Bogenwinkel von zumindest 180° kann gewährleistet werden, dass bei Verschwenkung des Anhängers um jeweils 90° nach links oder 90° nach rechts relativ zum Zugfahrzeug mit ein und demselben Schleifkontakt zuverlässig Energie an den jeweiligen korrespondierenden Kontakt an der Kupplungsaufnahme übertragen werden kann. Gleichzeitig kann somit das Ende dieses Kontaktes zwischen der Kupplungsaufnahme und im Kupplungsstecker auch als Warnungs- oder Trigger-Signal verwendet werden, um den Fahrer des Nutzfahrzeugs vor einem zu großen Verschwenkwinkel von Zugfahrzeug und Anhänger zu warnen. Um eine zuverlässige Übertragung von elektrischer Energie auch in größeren Schwenkbereichen von Zugfahrzeug und Anhänger zuzulassen, kann der Schleifkontakt sich mit einem Bogenwinkel von bis zu 270° um die erste Achse an der Innen-oder Außenwand des Kupplungsteiles erstrecken. In einer alternativ bevorzugten Ausführungsform erstreckt sich der oder die Vielzahl von Schleifkontakten mit einem Bogenwinkel von bis zu 360° oder besonders bevorzugt genau 360° um die erste Achse und/oder die zweite Achse. Es ist mit dieser bevorzugten Ausführungsform möglich, den Kupplungsstecker oder die mit den Schleifkontakten ausgestattete Kupplungsaufnehme in einer beliebigen Einbaulage, d.h. ohne eine bestimmte Verdreh im Bereich einer Sattelkupplung

Besonders bevorzugt ist der Schleifkontakt dabei am zweiten Kupplungsteil angeordnet. Insbesondere bevorzugt ist der Schleifkontakt dabei an der Innenseite des zweiten Kupplungsteils angeordnet. Da der an der Innenseite des zweiten Kupplungsteils vorgesehene zweite Druckraum mit Vorteil nicht zur Übertragung von Fluiddruck ausgelegt ist, sondern lediglich der Abfuhr von austretenden Leckage-Fluiden dient, kann in diesem Bereich mit Vorteil die elektrische Energieübertragung stattfinden, ohne dass diese mit der Fluiddruckübertragung interagiert. Auf diese Weise können in den übrigen Kontaktbereichen besonders fluiddichte Verbindungen zwischen einem Kupplungsstecker und einer Kupplungsaufnahme ausgebildet werden, während im Bereich des zweiten Druckraumes ausschließlich oder hauptsächlich die elektrische Energieübertragung vorgenommen wird. Entsprechend kann mit Vorteil der Schleifkontakt auch an der Außenseite des dritten Kupplungsteiles angeordnet sein. Weiterhin bevorzugt sind sowohl an der Innenseite des zweiten Kupplungsteils als auch an der Außenseite des dritten Kupplungsteiles entsprechende Schleifkontakte und elektrische Leiter vorgesehen, um eine Vielzahl von Leitungen zur Übertragung von elektrischen Signalen und elektrischer Energie bereitzustellen.

Bevorzugt ist an einem oder einer Vielzahl von Kupplungsteilen eine Vielzahl von elektrischen Schleifkontakten vorgesehen, wobei jeder der Schleifkontakte mit einem elektrischen Leiter verbunden ist. Durch das Anordnen einer Vielzahl von elektrischen Schleifkontakten und elektrischen Leitern kann insbesondere eine große Datenmenge elektrischer Signale gleichzeitig oder zusätzlich mit entsprechender elektrischer Spannung zur Versorgung von Pumpen, Motoren und Beleuchtung an den Anhänger übertragen werden.

Mit Vorteil sind dabei sämtliche der Schleifkontakte am zweiten Kupplungsteil angeordnet und festgelegt. Auf diese Weise kann insbesondere die Anschlussgeometrie der elektrischen Leiter am zweiten Kupplungsteil konzentriert werden, sodass an diesem mit Vorteil nur ein Steckerelement angesteckt werden muss, welches eine Vielzahl von elektrischen Leitern mit den jeweiligen, am zweiten Kupplungsteil angeordneten Schleifkontakten verbindet. Die einzelnen Schleifkontakte erstrecken sich dabei entlang von Umfangsbahnen um die erste Achse, und sind voneinander entlang der ersten Achse beabstandet angeordnet. Indem an der Steckeraufnahme korrespondierende Schleifkontakte vorgesehen sind, kann bei Erreichen der korrekten Stellung des Steckers und der Steckeraufnahme in der vollständig zusammengekoppelten Stellung längs der ersten Achse, jeweils ein Paar von Schleifkontakten am Stecker und an der Aufnahme elektrische Energie übertragen.

In einer bevorzugten Ausführungsform ist das erste Kupplungsteil mit einem Königszapfen stoffschlüssig verbunden oder einstückig ausgeführt. Auf diese Weise kann insbesondere der Bauraumbedarf des Kupplungssteckers innerhalb des Königszapfens deutlich reduziert werden, da bereits die Innenwand des in einen Königszapfen eingebrachten Durchgangsloches als erstes Kupplungsteil im Sinne der vorliegenden Erfindung verwendet werden kann. Gleichzeitig kann dadurch die besonders feste Verbindung zwischen dem Kupplungsstecker und dem Königszapfen erreicht werden.

Weiterhin bevorzugt mündet der zweite Druckraum in die Umgebung, wobei bevorzugt ein Schutzelement am Austritt in die Umgebung vorgesehen ist. Als Schutzelement kann im vorliegenden Fall vorzugsweise ein Filterelement zum Einsatz gelangen, welches verhindert, dass Schmutz oder unerwünschte Flüssigkeiten in den zweiten Druckraum eindringen. Weiterhin bevorzugt kann als Schutzelement auch ein Gitter vorgesehen sein, welches eine verbesserte Durchlässigkeit von Fluid erlaubt, aber das Eindringen von Schmutzpartikeln und Festkörpern in den zweiten Druckraum verhindert.

Mit Vorteil weist der Kupplungsstecker ein Lichtsignal-Übertragungssystem auf, wobei an zumindest einem der Kupplungsteile ein erster Lichtsignalsender und/oder - Empfänger festgelegt ist, welcher dafür ausgelegt ist, kontaktlos mit einem zweiten Lichtsignalsender und/oder -Empfänger an einer Kupplungsaufnahme zu kommunizieren.

Als Alternative oder zusätzlich zu dem elektrischen Energie-und Signalübertragungssystem weist der Kupplungsstecker vorzugsweise ein Lichtsignal-Übertragungssystem auf. Mit Vorteil ist also ein Lichtsignalleiter am Kupplungsstecker, vorzugsweise im Bereich des ersten Steckerbereiches vorgesehen, welcher mit Vorteil durch den ersten Druckraum, den zweiten Druckraum oder den dritten Druckraum hindurch Lichtsignale an einen entsprechenden Lichtsignalsender und/oder -Empfänger an eine Kupplungsaufnahme sendet oder empfängt. Der Vorteil eines Lichtsignal-Übertragungssystems ist, dass es kontaktlos funktionieren kann und somit ein Verschleis von Schleifkontakten wie bei dem elektrischen Signal-und Energieübertragungssystem nicht vorliegt. Dabei ist auch die durch ein Lichtsignal-Übertragungssystem übertragbare Signalmenge wesentlich größer als bei elektrischen Signalen, da insbesondere mit verschiedenen Wellenlängenbereichen elektromagnetischer Strahlung mehrere Signale gleichzeitig übertragen werden können. Besonders bevorzugt ist der erste Lichtsignalsender und/oder Lichtsignalempfänger innerhalb des dritten Kupplungsteiles angeordnet, wobei die erste Achse diesen Lichtsignalsender/-Empfänger schneidet und wobei der Lichtsignalsender/-Empfänger Lichtsignale parallel bzw. kollinear zur ersten Achse in Richtung eines zweiten Lichtsignalsenders/-Empfängers an der Kupplungsaufnahme sendet.

Weiterhin erfindungsgemäß ist eine Kupplungsaufnahme, insbesondere für den Einsatz an oder in einer Sattelkupplung, vorgesehen, welche ein erstes Aufnahmeteil, ein zweites Aufnahmeteil und ein drittes Aufnahmeteil aufweist, wobei das zweite Aufnahmeteil zumindest bereichsweise innerhalb des ersten Aufnahmeteils angeordnet ist und das dritte Aufnahmeteil zumindest bereichsweise innerhalb des zweiten Aufnahmeteils angeordnet ist, wobei sich die Aufnahmeteile im Bereich ihrer Überlappung koaxial zu einer zweiten Achse erstrecken, wobei zwischen dem ersten Aufnahmeteil und dem zweiten Aufnahmeteil ein erster Aufnahmedruckraum gebildet ist, wobei zwischen dem zweiten Aufnahmeteil und dem dritten Aufnahmeteil ein zweiter Aufnahmedruckraum gebildet ist, und wobei das dritte Aufnahmeteil hohlkörperförmig ausgebildet ist und einen dritten Aufnahmedruckraum bildet, wobei einem ersten Aufnahmeabschnitt der Kupplungsaufnahme zumindest das erste und das dritte Aufnahmeteil zum fluiddichten Anschluss an ein Fluiddrucksystem eines Nutzfahrzeuges ausgelegt sind, wobei in einem zweiten Aufnahmeabschnitt der Kupplungsaufnahme zumindest das erste und das dritte Aufnahmeteil für den Anschluss an einen Kupplungsstecker ausgebildet sind, wobei der zweite Aufnahmedruckraum im Bereich des ersten Aufnahmeabschnitts fluiddicht verschlossen ist oder in die Umgebung mündet, oder mit einer Leckageüberwachung verbunden ist. Die Kupplungsaufnahme ist vorzugsweise das Gegenstück zum Kupplungsstecker auf Seiten des Zugfahrzeuges, und ist entsprechend mit Vorteil an einer Sattelkupplung des Fahrzeuges festgelegt. Die entsprechend zu dem ersten Aufnahmeabschnitt und dem zweiten Aufnahmeabschnitt der Kupplungsaufnahme beschriebenen Merkmale sind im Wesentlichen identisch zu den zum ersten und zum zweiten Steckerbereich beschriebenen Merkmalen. Die Aufnahmeteile sind, wie auch die zuvor beschriebenen Kupplungsteile, im Wesentlichen hohlzylinderförmig ausgebildet und zumindest im Bereich ihrer Überlappung koaxial zu einer zweiten Achse, welche entsprechend der ersten Achse definiert ist, angeordnet. Analog zur Ausbildung des zweiten Anschlussdruckraumes als Pufferbereich zwischen dem ersten und dem dritten Anschlussdruckraum ist dieser entweder fluiddicht verschlossen, wobei in diesem Fall der zweite Druckraum des Kupplungssteckers möglichst nicht fluiddicht verschlossen ist, oder er mündet in die Umgebung oder ist mit einem Leckageüberwachungssystem verbunden. Wie bereits zum Kupplungsstecker beschrieben, kann der zweite Druckraum bevorzugt verschlossen sein und einen intern angeordneten Drucksensor aufweisen, welcher als Leckageüberwachung dient.

Mit Vorteil ist dabei der zweite Aufnahmedruckraum an ein Leckageüberwachungssystem angeschlossen. Mit Vorteil ist dabei das Leckageüberwachungssystem auf Seiten des Zugfahrzeugs angeordnet. Auf diese Weise kann gewährleistet werden, dass bei Ausfall der Elektrik am Anhänger trotzdem eine zuverlässige Warnung vor Leckage am ersten oder am dritten Druckraum bzw. am ersten oder am dritten Aufnahmedruckraum stattfindet. Für den Fall, dass der zweite Aufnahmedruckraum an einer Leckageüberwachung angeschlossen ist, ist verständlicherweise der Vorteil der zweite Druckraum am Kupplungsstecker fluiddicht abgeschlossen, sodass sämtliches Leckage-Fluid im zweiten Druckraum oder im zweiten Aufnahmedruckraum in Richtung der Leckageüberwachung fließen muss.

Bevorzugt weist die Kupplungsaufnahme analog zu dem elektrischen Energieübertragungssystem des Kupplungssteckers Schleifkontakte und elektrische Leiter auf, welche entsprechend dafür ausgelegt sind, elektrische Signale und elektrische Energie an oder von dem elektrischen System des Kupplungssteckers zu übertragen. Die Eigenschaften, insbesondere die Erstreckung der Schleifkontakte mit einem bestimmten Bogenwinkel, sind dabei im Wesentlichen analog zu den entsprechenden, zuvor beschriebenen Merkmalen des elektrischen Systems am Kupplungsstecker.

Weiterhin sind auch in der Kupplungsaufnahme Aufnahmeteile aus elektrisch nicht leitendem Material mit aufgebrachten Schleifkontakten bevorzugt, wie bereits zuvor für die Kupplungsteile beschrieben wurde.

Weiterhin ist erfindungsgemäß ein Kupplungssystem vorgesehen, welches einen Kupplungsstecker, wie zuvor beschrieben, und eine Kupplungsaufnahme, wie ebenfalls zuvor beschrieben, aufweist, wobei der Kupplungsstecker und die Kupplungsaufnahme derart ineinander greifen, dass das erste Kupplungsteil mit dem ersten Aufnahmeteil, das zweite Kupplungsteil mit dem zweiten Aufnahmeteil und das dritte Kupplungsteil mit dem dritten Aufnahmeteil fluiddicht kontaktiert, wobei die Kontaktflächen der Kupplungsteile und der Aufnahmeteile im Wesentlichen rotationssymmetrisch um die erste Achse ausgebildet sind.

Mit Vorteil sind dabei der Kupplungsstecker und die Kupplungsaufnahme entlang einer ersten Achse ineinander schiebbar, im zusammengeschobenen Zustand verlaufen die erste Achse und die zweite Achse kollinear. Mit Vorteil findet die Ankupplung bzw. der Ankupplungsvorgang zwischen dem Kupplungsstecker und der Kupplungsaufnahme und somit entlang der ersten Achse bzw. entlang der zweiten Achse statt. Dies bedeutet in der Praxis, dass der Königszapfen mit dem daran festgelegt Kupplungsstecker zunächst in die entsprechende Aufnahme an der Sattelkupplung eingeführt wird, was in der Regel quer zu der ersten Achse stattfindet. Anschließend kann der Kupplungsstecker und/oder die Kupplungsaufnahme parallel zur ersten bzw. zweiten Achse verlagert werden, um jeweils mit dem anderen Teil (Kupplungsstecker oder Kupplungsaufnahme) in fluiddichte Verbindung zu treten. Auf diese Weise kann das Kupplungssystem in einen Zustand gebracht werden, in welchem die Übertragung von Fluiddruck, bevorzugt Luftdruck oder hydraulischer Druck, und zusätzlich auch zur Übertragung von elektrischer Energie und elektrischen Signalen, und bevorzugt zusätzlich oder alternativ auch zur Übertragung von Lichtsignalen ausgelegt ist.

Mit Vorteil mündet dabei entweder der zweite Druckraum oder zweite Aufnahmedruckraum in die Umgebung oder ist mit einer Leckageüberwachung verbunden. Mit anderen Worten ist somit zumindest einer der beiden Druckräume, also der Druckraum am Kupplungsstecker oder der Aufnahmedruckraum an der Kupplungsaufnahme, fluiddicht geschlossen, sodass die Überwachung von Leckage-Fluid oder die Abfuhr von Leckage-Fluid nur in dem jeweils anderen Raum stattfindet. Mit Vorteil mündet der zweite Aufnahmedruckraum unterhalb der Kupplungsplatte in die Umgebung oder in ein Leckageüberwachungssystem. Hierdurch ist die Mündung des zweiten Aufnahmedruckraumes besonders gut gegen Fremdkörpereinwirkung von außen abgeschirmt.

Weitere Vorteile und Merkmale der vorliegenden Erfindung ergeben sich aus der nachfolgenden Beschreibung in Bezug auf die beigefügten Figuren. Es versteht sich, dass einzelne Merkmale, welche nur in einer der Ausführungsformen dargestellt sind, auch in anderen Ausführungsformen Einsatz finden können, sofern dies nicht explizit ausgeschlossen wurde oder sich aufgrund technischer Gegebenheiten verbietet. So können insbesondere nur für den Kupplungsstecker dargestellte Merkmale wie Schleifkontakte und elektrische Leiter selbstverständlich auch an entsprechend bevorzugten Ausführungsformen der Kupplungsaufnahme vorgesehen sein.

Es zeigen:
- Fig. 1: eine erste schematische Ansicht eines mit einer erfindungsgemäßen Kupplungsaufnahme ausgestatteten Nutzfahrzeuges.
- Fig. 2: eine schematische Ansicht eines Kupplungssteckers und einer Kupplungsaufnahme im Sinne der vorliegenden Erfindung.
- Fig. 3: eine Ansicht einer bevorzugten Ausführungsform eines Teils eines Kupplungssteckers,
- Fig. 4: eine geschnittene Ansicht einer bevorzugten Ausführungsform eines erfindungsgemäßen Kupplungssteckers, und
- Fig. 5: eine geschnittene Ansicht einer bevorzugten Ausführungsform eines Kupplungssystems gemäß der vorliegenden Erfindung.

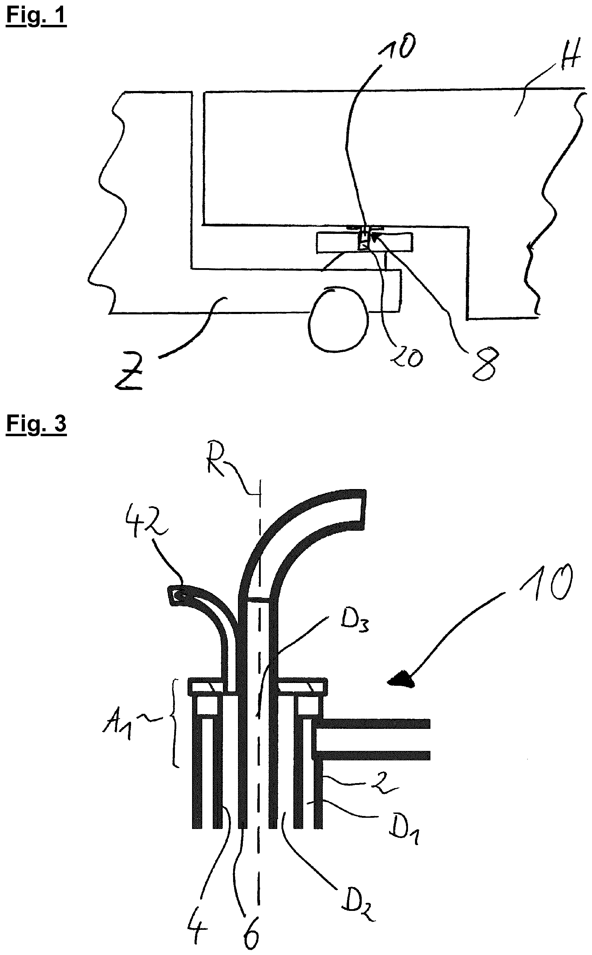

Die in Fig. 1 gezeigte schematische Ansicht eines Nutzfahrzeuges mit einem Zugfahrzeug Z und einem Anhänger H weist eine Sattelkupplung mit einem Königszapfen 8 auf. Im oder zumindest am Königszapfen 8 ist dabei ein Kupplungsstecker 10 vorgesehen. Korrespondierend dazu weist die Sattelkupplung des Zugfahrzeuges Z eine Kupplungsaufnahme 20 auf. Der Kupplungsstecker 10 und die Kupplungsaufnahme 20 definieren somit ein Kupplungssystem gemäß der vorliegenden Erfindung. Durch das Kupplungssystem ist es möglich, Fluiddruck, insbesondere pneumatischen Druck oder hydraulischen Druck, sowie gegebenenfalls auch elektrische Energie oder elektrische Steuersignale im Bereich des Drehpunktes zwischen dem Zugfahrzeug Z und dem Anhänger H zu übertragen. Daher ist es nicht nötig, weitere Leitungen oder Kabel zwischen dem Zugfahrzeug Z und dem Anhänger H zu verlegen, welche bei Schwenkbewegung des Anhängers relativ zum Zugfahrzeug verformt und geführt werden müssen und dabei verschleißen. Weiterhin wird auch der Bauraum der durch diese Kabel eingenommen würde, eingespart, sodass der Verbindungsbereich zwischen dem Zugfahrzeug Z und dem Anhänger H wesentlich kompakter ausgebildet ist, als aus dem Stand der Technik bisher bekannt.

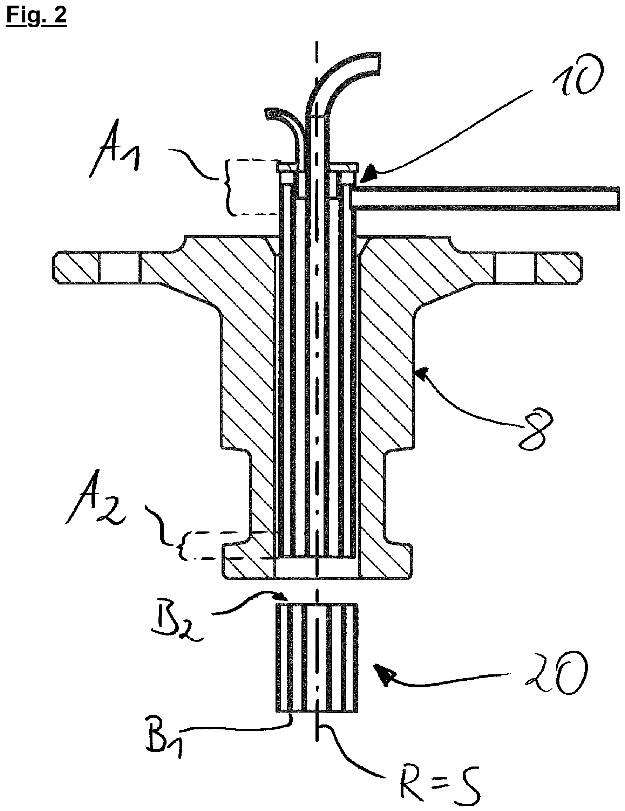

Fig. 2 zeigt eine geschnittene Ansicht eines Königszapfens 8, in welchem ein Kupplungsstecker 10 eingebracht ist. Weiterhin ist schematisch dargestellt, dass an der nicht gezeigten Sattelkupplung eine Kupplungsaufnahme 20 derart angeordnet ist, dass die erste Achse R des Kupplungssteckers 10 kollinear zur zweiten Achse S der Kupplungsaufnahme 20 steht. In dieser Stellung zueinander kann im vorliegenden Fall vorzugsweise die Kupplungsaufnahme 20 entlang der ersten bzw. zweiten Achse R, S in Richtung des Kupplungssteckers 10 verlagert werden, um mit einem zweiten Aufnahmebereich B₂ in Eingriff mit dem zweiten Steckerbereich A₂ zu gelangen. Insbesondere überlappen sich die Kupplungsaufnahme 20 und der Kupplungsstecker 10 dabei in zusammengestecktem Zustand derart, dass eine fluiddichte Verbindung zwischen den einzelnen Teilen des Kupplungssteckers 10 und der Kupplungsaufnahme 20 hergestellt wird. Weiterhin ist dargestellt, dass sowohl die Kupplungsaufnahme 20 als auch der Kupplungsstecker 10 jeweils einen ersten Bereich A1 und B1 aufweisen, wobei in diesem ersten Bereich jeweils die Verbindung des Kupplungssteckers 10 und der Kupplungsaufnahme 20 mit dem Leitungssystem am Anhänger H bzw. am Zugfahrzeug Z hergestellt werden kann.

Fig. 3 zeigt eine Detailansicht des oberen Bereiches eines Kupplungssteckers 10. Dabei ist erkennbar, dass das erste Kupplungsteil 2 und das zweite Kupplungsteil 3 einen ersten Druckraum D₁ begrenzen, und das zweite Kupplungsteil 4 und das dritte Kupplungsteil 6 einen zweiten Druckraum D₂, und das dritte Kupplungsteil 6 einen dritten Druckraum D₃ umschließt. Der erste Druckraum D₁ mündet dabei in das schematisch dargestellte und sich horizontal aus dem Kupplungsstecker 10 herauserstreckenden Rohr, welches zur Zu-oder Abfuhr von Fluiddruck dient. Der dritte Druckraum D₃ mündet dabei in das an der Oberseite angebrachte Rohr oder einen entsprechenden Schlauch, welcher ebenfalls zur Zu-und/oder Abfuhr von Fluiddruck ausgelegt ist. Der zweite Druckraum D₂ mündet in das auf der linken Seite des Kupplungssteckers 10 angeordnete Rohr, welches in die Umgebung mündet. Am Austrittsbereich dieses gekrümmten Rohres ist ein Schutzelement 42 vorgesehen, welches insbesondere als Filter oder Gitter ausgelegt ist, um das Eindringen von Schmutz oder korrosiven Flüssigkeiten in den zweiten Druckraum D₂ zu verhindern. Sämtliche Anschlussgeometrien zur Verbindung der Druckräume D₁, D₂, D₃ mit dem Anhänger H befinden sich dabei im Wesentlichen im Bereich eines ersten Steckerbereiches A₁, welcher sich, bezogen auf den gesamten Kupplungsstecker 10, vorzugsweise an der Oberseite, d.h. vorzugsweise an der Seite, welche in Richtung des Anhängers H weist, vorgesehen ist. An der in Fig. 3 nicht gezeigten Unterseite des Kupplungssteckers 10 ist vorzugsweise der zweite Steckerbereich A₂ angeordnet, in welchem der Kupplungsstecker 10 mit einer Kupplungsaufnahme 20 siehe Fig. 2 und Fig. 1 angeschlossen werden kann.

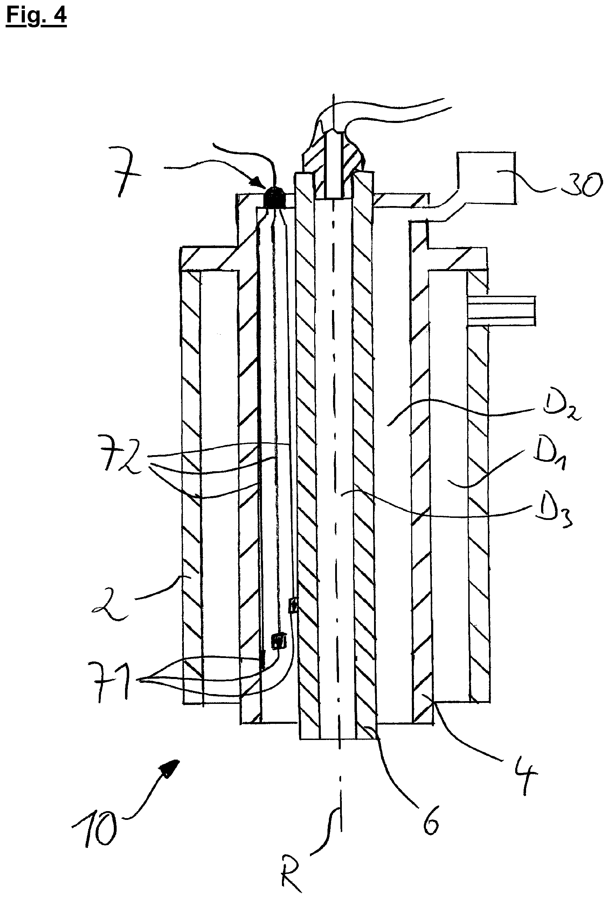

Fig. 4 zeigt eine geschnittene Ansicht einer bevorzugten Ausführungsform des erfindungsgemäßen Kupplungssteckers 10. Dabei ist neben den zuvor beschriebenen Druckräumen D₁ bis D₃ zusätzlich noch ein bevorzugt vorgesehenes elektrisches System 7 am Kupplungsstecker 10 angeordnet. Das elektrische System 7 weist bevorzugt Schleifkontakte 71 und zu diesen Schleifkontakten 71 führende elektrische Leiter 72 auf. Bei der in Fig. 4 gezeigten, bevorzugten Ausführungsform ist das elektrische System im Wesentlichen am zweiten Kupplungsteil 4 angeordnet und festgelegt. Es ist aber auch denkbar, dass die einzelnen Schleifkontakte 71 auf verschiedene Kupplungsteile 2, 4, 6 verteilt werden. Darüber hinaus ist in Fig. 4 gezeigt, dass der zweite Druckbereich D₂ im Unterschied zu der in den vorherigen gezeigten Ausführungsformen, nicht in die Umgebung, sondern in eine Leckageüberwachung 30 mündet. Die Leckageüberwachung 30 kann beispielsweise einen Drucksensor aufweisen, welcher bei Ansteigen des Druckes im zweiten Druckbereich D₂ ein Warnsignal an den Fahrer des Nutzfahrzeuges ausgibt. Dabei kann die Leckageüberwachung 30 sowohl am Kupplungsstecker 10 als auch in der hierzu korrespondierend ausgebildeten Kupplungsaufnahme 20 angeordnet sein. Bevorzugt ist sowohl in der Kupplungsaufnahme 20, welche am Zugfahrzeug Z festgelegt ist, als auch am Kupplungsstecker 10, welcher am Anhänger H festgelegt ist, eine Leckageüberwachung 30 vorgesehen. Es versteht sich, dass das in Fig. 4 gezeigte elektrische System 7 korrespondierend auch an der Kupplungsaufnahme 20, welche in dieser Figur nicht dargestellt ist, vorhanden ist, wobei zu den Schleifkontakten 71 am Kupplungsstecker 10 entsprechende Schleifkontakte 71 auch an der Kupplungsaufnahme 20 ausgebildet sind.

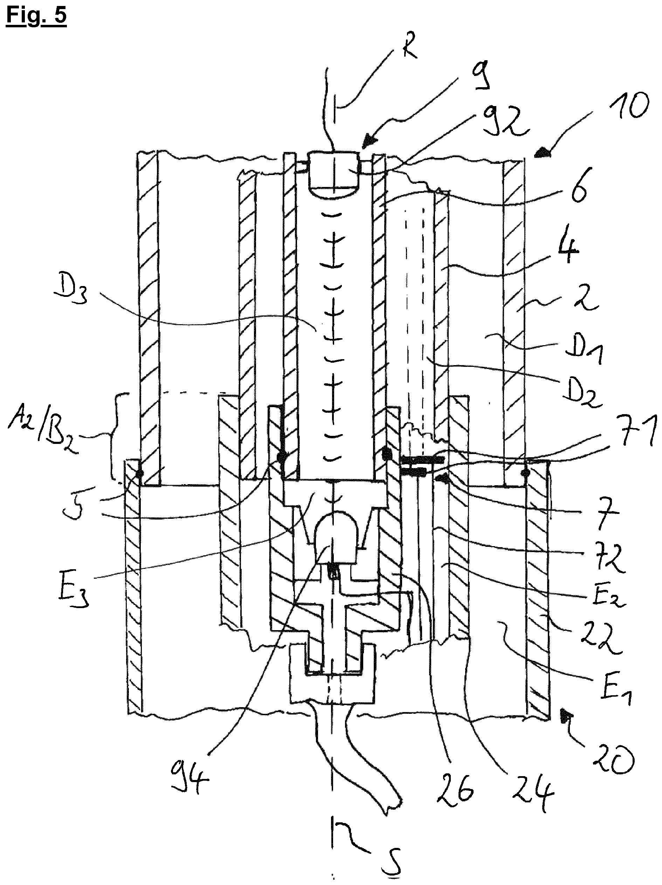

Fig. 5 zeigt ein Kupplungssystem gemäß der vorliegenden Erfindung, bei welchem bevorzugt zusätzlich zu dem elektrischen System 7auch ein Lichtsignalübertragungssystem 9 vorgesehen ist. Das Lichtsignalübertragungssystem weist einen ersten Lichtsignalsender/-Empfänger 92 auf, welcher am Kupplungsstecker 10 und insbesondere bevorzugt am dritten Kupplungsteil 6 festgelegt ist. An der Kupplungsaufnahme 20 ist korrespondierend dazu ein zweiter Lichtsignalsender/-Empfänger 94 angeordnet, welcher mit dem am Kupplungsstecker 10 angeordneten Lichtsignalsender/-Empfänger 92 kommuniziert. Lichtsignalsender haben den Vorteil, dass mit Ihnen höhere Datenraten übertragen werden können als bei einfachen elektrischen, analogen Leitungen und keine Verschleißvorgänge aufgrund von Festkörperreibung, wie dies im elektrischen System 7 geschieht, stattfindet. Darüber hinaus zeigt Fig. 5 das Kupplungssystem im zusammengesteckten Zustand, wobei der Kupplungsstecker 10 und die Kupplungsaufnahme 20 längs der ersten Achse R und der in dieser Stellung kollinear verlaufenden zweiten Achse S ineinandergesteckt sind. Zur Abdichtung zwischen dem ersten Kupplungsteil 2 und dem ersten Aufnahmeteil 22 ist in deren Überlappungsbereich zumindest eine Dichtung 5 vorgesehen. Gleichsam ist eine solche Dichtung 5 im Überlappungsbereich zwischen dem dritten Kupplungsteil 6 und dem dritten Aufnahmeteil 26 vorgesehen ist. Im zusammengesteckten Zustand bilden der erste Druckraum D₁ und der erste Aufnahmedruckraum E₁ ein gemeinsames Volumen zur Übertragung von Fluiddruck. Ebenso bilden der zweite Druckraum D₂ und der zweite Aufnahmedruckraum E₂ ein gemeinsames Volumen, in welchem sich Leckagefluid sammelt und an die Umgebung abgegeben oder in einer Leckageüberwachung gemessen wird. Auch der dritte Druckraum D₃ und der dritte Aufnahmedruckraum E₃ bilden ein gemeinsames Volumen, in welchem Fluiddruck übertragen werden kann. Das zweite Kupplungsteil 4 ist im zweiten Steckerbereich A₂ auf der rechten Seite in Fig. 5 bereichsweise aufgebrochen dargestellt, wodurch der Blick auf die Schleifkontakte 71 und elektrischen Leiter 72, welche am zweiten Aufnahmeteil 24 festgelegt sind, frei ist. Die Schleifkontakte 72 am zweiten Aufnahmeteil 24 erstrecken sich mit Vorteil entlang der Innenwand des zweiten Aufnahmeteils 24 und spannen einen Bogenwinkel von ca. 180° um die zweite Achse S auf. Am zweiten Kupplungsteil 4 sind korrespondierende Schleifkontakte vorhanden, die jeweils in einer bestimmten Lage parallel zur ersten Achse R angeordnet sind und mit je einem Schleifkontakt 72 am zweiten Aufnahmeteil 24 in Kontakt gelangen. Es versteht sich, dass auch am ersten und am dritten Aufnahmeteil 22, 26 solche Schleifkontakte 72 mit elektrischen Leitern 71 angeordnet sein können. Der Außendurchmesser des ersten Kupplungsteils 2 ist mit Vorteil kleiner als der Außendurchmesser des ersten Aufnahmeteils 22, weil der Kupplungsstecker auf diese Weise in eine möglichst kleine Aussparung n einem Königszapfen 8 eingesetzt werden kann.

**Bezugszeichen:**

| | | | |
|---|---|---|---|
| 2 | - erstes Kupplungsteil | 8 | - Königszapfen |
| 4 | - zweites Kupplungsteil | 9 | - Lichtsignalübertragungssystem |
| 5 | - Dichtung | 10 | - Kupplungsstecker |
| 6 | - drittes Kupplungsteil | 20 | - Kupplungsaufnahme |
| 7 | - elektrisches System | 22 | - erstes Aufnahmeteil |
| 24 | - zweites Aufnahmeteil | B₂ | - zweiter Aufnahmebereich |
| 26 | - drittes Aufnahmeteil | D₁ | - erster Druckraum |
| 30 | - Leckageüberwachung | D₂ | - zweiter Druckraum |
| 42 | - Schutzelement | D₃ | - dritter Druckraum |
| 71 | - Schleifkontakt | E₁ | - erster Aufnahmedruckraum |
| 72 | - elektrischer Leiter | E₂ | - zweiter Aufnahmedruckraum |
| 92 | - Lichtsignalsender/-empfänger | E₃ | - dritter Aufnahmedruckraum |
| 94 | - Lichtsignalsender/-empfänger | H | - Anhänger |
| A₁ | - erster Steckerbereich | R | - erste Achse |
| A₂ | - zweiter Steckerbereich | S | - zweite Achse |
| B₁ | - erster Aufnahmebereich | Z | - Zugfahrzeug |

## Patentansprüche

1. Kupplungsstecker (10), insbesondere für einen Königszapfen, umfassend ein erstes Kupplungsteil (2), ein zweites Kupplungsteil (4) und ein drittes Kupplungsteil (6),
wobei das zweite Kupplungsteil (4) zumindest bereichsweise innerhalb des ersten Kupplungsteils (2) angeordnet ist und das dritte Kupplungsteil (6) zumindest bereichsweise innerhalb des zweiten Kupplungsteils (4) angeordnet ist,
wobei sich die Kupplungsteile (2, 4, 6) im Bereich ihrer Überlappung koaxial zu einer ersten Achse (R) erstrecken,
wobei zwischen dem ersten Kupplungsteil (2) und dem zweiten Kupplungsteil (4) ein erster Druckraum (D₁) gebildet ist,
wobei zwischen dem zweiten Kupplungsteil (4) und dem dritten Kupplungsteil (6) ein zweiter Druckraum (D₂) gebildet ist,
wobei das dritte Kupplungsteil (6) hohlkörperförmig ausgebildet ist und einen dritten Druckraum (D₃) bildet,
wobei in einem ersten Steckerbereich (A₁) des Kupplungssteckers (10) zumindest das erste und das dritte Kupplungsteil (2, 6) zum fluiddichten Anschluss an ein Fluiddrucksystem eines Anhängers (H) ausgelegt sind,
wobei in einem zweiten Steckerbereich (A₂) des Kupplungssteckers (10) zumindest das erste und das dritte Kupplungsteil (2, 6) für den Anschluss an eine Kupplungsaufnahme (20) ausgelegt sind,
**dadurch gekennzeichnet, dass**
der zweite Druckraum (D₂) im Bereich des ersten Steckerbereichs (A₁) fluiddicht verschlossen ist oder in die Umgebung mündet oder mit einer Leckageüberwachung (30) verbunden ist.

2. Kupplungsstecker (10) nach Anspruch 1,
wobei das erste Kupplungsteil (2) gegen Verdrehung um die erste Achse (R) relativ zu dem Anhänger (H) gesichert ist.

3. Kupplungsstecker (10) nach einem der vorhergehenden Ansprüche,
wobei zumindest eines der Kupplungsteile (2, 4, 6) im Bereich des zweiten Steckerbereiches (A₂) einen Schleifkontakt (71) eines elektrischen Systems (7) aufweist.

4. Kupplungsstecker (10) nach Anspruch 3,
wobei der Schleifkontakt (71) mit einem elektrischen Leiter (72) verbunden ist, welcher isoliert vom jeweiligen Kupplungsteil (2, 4, 6) ist und im ersten Steckerbereich (A₁) bevorzugt aus dem Kupplungsstecker (10) ragt.

5. Kupplungsstecker (10) nach Anspruch 3 oder 4,
wobei der Schleifkontakt (71) sich mit einem Bogenwinkel von zumindest 180° um die erste Achse (R) an der Innen- oder der Außenwand des jeweiligen Kupplungsteils (2, 4, 6) erstreckt.

6. Kupplungsstecker (10) nach einem der Ansprüche 3 bis 5,
wobei an einem oder einer Vielzahl von Kupplungsteilen (2, 4, 6) eine Vielzahl von elektrischen Schleifkontakten (71) vorgesehen ist,
wobei jeder der Schleifkontakte (71) mit einem elektrischen Leiter (72) verbunden ist.

7. Kupplungsstecker (10) nach einem der Ansprüche 3 bis 6,
wobei alle Schleifkontakte (71) am zweiten Kupplungsteil (4) angeordnet und festgelegt sind.

8. Kupplungsstecker (10) nach einem der Ansprüche 3 bis 7,
wobei zumindest eines der Kupplungsteile (2, 4, 6) aus elektrisch nicht leitendem Material hergestellt ist, wobei auf dieses zumindest eine Kupplungsteil (2, 4, 6) zumindest ein Schleifkontakt (71) aufgebracht ist.

9. Kupplungsstecker nach Anspruch 8,
wobei zumindest zwei benachbarte Kupplungsteile (2 und 4 oder 4 und 6) aus elektrisch nicht leitendem Material hergestellt sind,
wobei auf beide dieser Kupplungsteile (2, 4, 6) je zumindest ein Schleifkontakt (71) aufgebracht ist

10. Kupplungsstecker (10) nach einem der vorhergehenden Ansprüche,
wobei das erste Kupplungsteil (2) mit einem Königszapfen (8) stoffschlüssig verbunden oder einstückig ausgeführt ist.

11. Kupplungsstecker (10) nach einem der vorhergehenden Ansprüche,
wobei der zweite Druckraum (D₂) in die Umgebung mündet,
wobei bevorzugt ein Schutzelement (42) am Austritt in die Umgebung vorgesehen ist.

12. Kupplungsstecker (10) nach einem der vorhergehenden Ansprüche, aufweisend ein Lichtsignalübertragungssystem (9),
wobei an zumindest einem der Kupplungsteile (2 ,4, 6) ein erster Lichtsignalsender und/oder -empfänger (92) festgelegt ist, welcher dafür ausgelegt ist, kontaktlos mit einem zweiten Lichtsignalsender und/oder -empfänger (94) an einer Kupplungsaufnahme (20) zu kommunizieren.

13. Kupplungsaufnahme (20), insbesondere für eine Sattelkupplung, aufweisend ein erstes Aufnahmeteil (22), ein zweites Aufnahmeteil (24) und ein drittes Aufnahmeteil (26),
wobei das zweite Aufnahmeteil (24) bereichsweise innerhalb des ersten Aufnahmeteils (22) angeordnet ist und das dritte Aufnahmeteil (26) bereichsweise innerhalb des zweiten Aufnahmeteils (24) angeordnet ist,
wobei sich die Aufnahmeteile (22, 24, 26) im Bereich ihrer Überlappung koaxial zu einer zweiten Achse (S) erstrecken,
wobei zwischen dem ersten Aufnahmeteil (22) und dem zweiten Aufnahmeteil (24) ein erster Aufnahmedruckraum (E₁) gebildet ist,
wobei zwischen dem zweiten Aufnahmeteil (24) und dem dritten Aufnahmeteil (26) ein zweiter Aufnahmedruckraum (E₂) gebildet ist,
wobei das dritte Aufnahmeteil (26) hohlkörperförmig ausgebildet ist und einen dritten Aufnahmedruckraum (E₃) bildet,
wobei in einem ersten Aufnahmeabschnitt (B₁) der Kupplungsaufnahme (20) zumindest das erste und das dritte Aufnahmeteil (22, 26) zum fluiddichten Anschluss an ein Fluiddrucksystem eines Zugfahrzeuges (Z) ausgelegt sind,
wobei in einem zweiten Aufnahmeabschnitt (B₂) der Kupplungsaufnahme (20) zumindest das erste und das dritte Aufnahmeteil (22, 26) für den Anschluss an einen Kupplungsstecker (10) ausgelegt sind,
**dadurch gekennzeichnet, dass**
der zweite Aufnahmedruckraum (E₂) im Bereich des ersten Aufnahmeabschnitts (B₁) fluiddicht verschlossen ist oder in die Umgebung mündet oder mit einer Leckageüberwachung (30) verbunden ist.

14. Kupplungsaufnahme (20) nach Anspruch 13,
wobei der zweite Aufnahmedruckraum (E₂) an ein Leckageüberwachungssystem (30) angeschlossen ist.

15. Kupplungssystem, umfassend einen Kupplungsstecker (10) nach einem der Ansprüche 1 bis 12 und eine Kupplungsaufnahme (20) nach einem der Ansprüche 13 oder 14,
wobei der Kupplungsstecker (10) und die Kupplungsaufnahme (20) derart ineinander greifen, dass das erste Kupplungsteil (2) mit dem ersten Aufnahmeteil (22), das zweite Kupplungsteil (4) mit dem zweiten Aufnahmeteil (24) und das dritte Kupplungsteil (6) mit dem dritten Aufnahmeteil (26) fluiddicht kontaktiert, wobei die Kontaktflächen der Kupplungsteile (2, 4, 6) und der Aufnahmeteile (22, 24, 26) im Wesentlichen rotationssymmetrisch um die erste Achse (R) ausgebildet sind.

## Claims

1. A coupling plug (10), in particular for a kingpin, comprising a first coupling part (2), a second coupling part (4) and a third coupling part (6), wherein the second coupling part (4) is arranged at least partially within the first coupling part (2) and the third coupling part (6) is arranged at least partially within the second coupling part (4),
wherein the coupling parts (2, 4, 6) extend coaxially to a first axis (R) in the area of their overlap,
wherein a first pressure chamber (D₁) is formed between the first coupling part (2) and the second coupling part (4),
wherein a second pressure chamber (D₂) is formed between the second coupling part (4) and the third coupling part (6),
wherein the third coupling part (6) is hollow and forms a third pressure chamber (D₃),
wherein in a first plug area (A₁) of the coupling plug (10) at least the first and third coupling parts (2, 6) are designed for fluid-tight connection to a fluid pressure system of a trailer (H),
wherein in a second plug area (A₂) of the coupling plug (10) at least the first and the third coupling part (2, 6) are designed for connection to a coupling receptacle (20),
**characterized in that**
the second pressure chamber (D₂) in the area of the first plug area (A₁) is closed in a fluid-tight manner or opens into the environment or is connected to a leakage monitor (30).

2. The coupling plug (10) according to claim 1,
wherein the first coupling part (2) is secured against rotation about the first axis (R) relative to the trailer (H).

3. The coupling plug (10) according to any one of the preceding claims,
wherein at least one of the coupling parts (2, 4, 6) has a sliding contact (71) of an electrical system (7) in the area of the second plug area (A₂).

4. The coupling plug (10) according to claim 3,
wherein the sliding contact (71) is connected to an electrical conductor (72) which is insulated from the respective coupling part (2, 4, 6) and preferably projects out of the coupling plug (10) in the first plug area (A₁).

5. The coupling plug (10) according to claim 3 or 4,
wherein the sliding contact (71) extends with an arc angle of at least 180° about the first axis (R) on the inner or outer wall of the respective coupling part (2, 4, 6).

6. The coupling plug (10) according to any one of claims 3 to 5,
wherein a plurality of electrical sliding contacts (71) is provided on one or a plurality of coupling parts (2, 4, 6),
wherein each of the sliding contacts (71) is connected to an electrical conductor (72).

7. The coupling plug (10) according to any one of claims 3 to 6,
wherein all sliding contacts (71) are arranged and fixed on the second coupling part (4).

8. The coupling plug (10) according to any one of claims 3 to 7,
wherein at least one of the coupling parts (2, 4, 6) is made of electrically non-conductive material, wherein at least one sliding contact (71) is applied to this at least one coupling part (2, 4, 6).

9. The coupling plug according to claim 8,
wherein at least two adjacent coupling parts (2 and 4 or 4 and 6) are made of electrically non-conductive material
wherein at least one sliding contact (71) is applied to each of these coupling parts (2, 4, 6)

10. The coupling plug (10) according to any one of the previous claims,
wherein the first coupling part (2) is materially connected to or constructed in one piece with a kingpin (8).

11. The coupling plug (10) according to any one of the preceding claims,
wherein the second pressure chamber (D₂) opens into the environment,
wherein preferably a protective element (42) is provided at the outlet into the environment.

12. The coupling plug (10) according to any one of the preceding claims, comprising a light signal transmission system (9),
wherein a first light signal transmitter and/or receiver (92) is fixed to at least one of the coupling parts (2, 4, 6), which is designed to communicate without contact with a second light signal transmitter and/or receiver (94) on a coupling receptacle (20).

13. A coupling receptacle (20), in particular for a fifth wheel coupling, comprising a first receiving part (22), a second receiving part (24) and a third receiving part (26),
wherein the second receiving part (24) is arranged in regions within the first receiving part (22) and the third receiving part (26) is arranged in regions within the second receiving part (24),
wherein the receiving parts (22, 24, 26) extend coaxially to a second axis (S) in the area of their overlap,
wherein a first receiving pressure chamber (E₁) is formed between the first receiving part (22) and the second receiving part (24),
wherein a second receiving pressure chamber (E₂) is formed between the second receiving part (24) and the third receiving part (26), wherein the third receiving part (26) is hollow and forms a third receiving pressure chamber (E₃),
wherein in a first receiving section (B₁) of the coupling receptacle (20) at least the first and the third receiving part (22, 26) are designed for fluid-tight connection to a fluid pressure system of a towing vehicle (Z),
wherein in a second receiving section (B₂) of the coupling receptacle (20) at least the first and the third receiving part (22, 26) are designed for connection to a coupling plug (10),
**characterized in that**
the second receiving pressure chamber (E₂) in the area of the first receiving area (B₁) is closed in a fluid-tight manner or opens into the environment or is connected to a leakage monitor (30).

14. The coupling receptacle (20) according to claim 13,
wherein the second receiving pressure chamber (E₂) is connected to a leakage monitoring system (30).

15. A coupling system comprising a coupling plug (10) according to any one of claims 1 to 12 and a coupling receptacle (20) according to any one of claims 13 or 14,
wherein the coupling plug (10) and the coupling receptacle (20) engage with one another in such a way that the first coupling part (2) makes fluid-tight contact with the first receiving part (22), the second coupling part (4) makes fluid-tight contact with the second receiving part (24) and the third coupling part (6) makes fluid-tight contact with the third receiving part (26),
wherein the contact surfaces of the coupling parts (2, 4, 6) and the receiving parts (22, 24, 26) are substantially rotationally symmetrical about the first axis (R).

## Revendications

1. Fiche de couplage (10), en particulier pour un pivot central d'attelage, comprenant une première partie de couplage (2), une deuxième partie de couplage (4) et une troisième partie de couplage (6),
dans laquelle
la deuxième partie de couplage (4) est disposée au moins localement à l'intérieur de la première partie de couplage (2), et la troisième partie de couplage (6) est disposée au moins localement à l'intérieur de la deuxième partie de couplage (4),
les parties de couplage (2, 4, 6) s'étendent coaxialement à un premier axe (R) dans la zone de leur chevauchement,
un premier espace de pression (D₁) est formé entre la première partie de couplage (2) et la deuxième partie de couplage (4),
un deuxième espace de pression (D₂) est formé entre la deuxième partie de couplage (4) et la troisième partie de couplage (6),
la troisième partie de couplage (6) est réalisée en forme de corps creux et constitue un troisième espace de pression (D₃),
dans une première zone de fiche (A₁) de la fiche de couplage (10), au moins la première et la troisième partie de couplage (2, 6) sont conçues pour être raccordées de manière étanche aux fluides à un système de pression de fluide d'une remorque (H),
dans une deuxième zone de fiche (A₂) de la fiche de couplage (10), au moins la première et la troisième partie de couplage (2, 6) sont conçues pour être raccordées à une prise de couplage (20),
**caractérisée en ce que**
au niveau de la première zone de fiche (A₁), le deuxième espace de pression (D₂) est fermé de manière étanche aux fluides ou débouche dans l'environnement ou est relié à un système de surveillance de fuites (30).

2. Fiche de couplage (10) selon la revendication 1,
dans laquelle la première partie de couplage (2) est bloquée à l'encontre d'une rotation autour du premier axe (R) par rapport à la remorque (H).

3. Fiche de couplage (10) selon l'une des revendications précédentes,
dans laquelle l'une au moins des parties de couplage (2, 4, 6) présente un contact glissant (71) d'un système électrique (7) au niveau de la deuxième zone de fiche (A₂).

4. Fiche de couplage (10) selon la revendication 3,
dans laquelle le contact glissant (71) est connecté à un conducteur électrique (72) qui est isolé de la partie de couplage respective (2, 4, 6) et qui dépasse de préférence de la fiche de couplage (10) dans la première zone de fiche (A₁).

5. Fiche de couplage (10) selon la revendication 3 ou 4,
dans laquelle le contact glissant (71) s'étend selon un angle d'arc d'au moins 180° autour du premier axe (R) sur la paroi intérieure ou extérieure de la partie de couplage respective (2, 4, 6).

6. Fiche de couplage (10) selon l'une des revendications 3 à 5,
dans laquelle une multitude de contacts électriques glissants (71) sont prévus sur une ou plusieurs parties de couplage (2, 4, 6), et
chacun desdits contacts glissants (71) est connecté à un conducteur électrique (72).

7. Fiche de couplage (10) selon l'une des revendications 3 à 6,
dans laquelle tous les contacts glissants (71) sont disposés et fixés à la deuxième partie de couplage (4).

8. Fiche de couplage (10) selon l'une des revendications 3 à 7,
dans laquelle l'une au moins des parties de couplage (2, 4, 6) est constituée d'un matériau non conducteur de l'électricité, au moins un contact glissant (71) étant appliqué à ladite au moins une partie de couplage (2, 4, 6).

9. Fiche de couplage selon la revendication 8,
dans laquelle au moins deux parties de couplage adjacentes (2 et 4 ou 4 et 6) sont constituées d'un matériau non conducteur de l'électricité, et
au moins un contact glissant (71) respectif est appliqué à chacune de ces deux parties de couplage (2, 4, 6).

10. Fiche de couplage (10) selon l'une des revendications précédentes,
dans laquelle la première partie de couplage (2) est reliée par coopération de matière ou réalisée d'un seul tenant avec un pivot central d'attelage (8).

11. Fiche de couplage (10) selon l'une des revendications précédentes,
dans laquelle le deuxième espace de pression (D₂) débouche dans l'environnement, et
de préférence, un élément de protection (42) est prévu à la sortie vers l'environnement.

12. Fiche de couplage (10) selon l'une des revendications précédentes, comprenant un système de transmission de signaux lumineux (9),
un premier émetteur et/ou récepteur de signaux lumineux (92) étant immobilisé sur l'une au moins des parties de couplage (2, 4, 6), qui est conçu pour communiquer sans contact avec un deuxième émetteur et/ou récepteur de signaux lumineux (94) sur une prise de couplage (20).

13. Prise de couplage (20), en particulier pour une sellette d'attelage,
comprenant une première partie de prise (22), une deuxième partie de prise (24) et une troisième partie de prise (26),
dans laquelle
la deuxième partie de prise (24) est disposée localement à l'intérieur de la première partie de prise (22) et la troisième partie de prise (26) est disposée localement à l'intérieur de la deuxième partie de prise (24),
les parties de prise (22, 24, 26) s'étendent coaxialement à un deuxième axe (S) dans la zone de leur chevauchement,
un premier espace de pression de prise (E₁) est formé entre la première partie de prise (22) et la deuxième partie de prise (24),
un deuxième espace de pression de prise (E₂) est formé entre la deuxième partie de prise (24) et la troisième partie de prise (26),
la troisième partie de prise (26) est réalisée en forme de corps creux et constitue un troisième espace de pression de prise (E₃),
dans une première portion de prise (B₁) de la prise de couplage (20), au moins la première et la troisième partie de prise (22, 26) sont conçues pour être raccordées de manière étanche aux fluides à un système de pression de fluide d'un véhicule tracteur (Z),
dans une deuxième portion de prise (B₂) de la prise de couplage (20), au moins la première et la troisième partie de prise (22, 26) sont conçues pour être raccordées à une fiche de couplage (10),
**caractérisée en ce que**
dans la zone de la première portion de prise (B₁), le deuxième espace de pression de prise (E₂) est fermé de manière étanche aux fluides ou débouche dans l'environnement ou est relié à un système de surveillance de fuites (30).

14. Prise de couplage (20) selon la revendication 13,
dans laquelle le deuxième espace de pression de prise (E₂) est relié à un système de surveillance de fuites (30).

15. Système de couplage comprenant une fiche de couplage (10) selon l'une des revendications 1 à 12 et une prise de couplage (20) selon l'une des revendications 13 ou 14,
dans lequel
la fiche de couplage (10) et la prise de couplage (20) s'engagent l'une dans l'autre de telle sorte que la première partie de couplage (2) est en contact étanche aux fluides avec la première partie de prise (22), la deuxième partie de couplage (4) est en contact étanche aux fluides avec la deuxième partie de prise (24), et la troisième partie de couplage (6) est en contact étanche aux fluides avec la troisième partie de prise (26),
les surfaces de contact des parties de couplage (2, 4, 6) et des parties de prise (22, 24, 26) sont réalisées sensiblement à symétrie de révolution autour du premier axe (R).
